# EUROPEAN PATENT APPLICATION

(11) **EP 3 450 580 A1**
(43) Date of publication of application: **06.03.2019**
(21) Application number: 17789260.1
(22) Date of filing: 11.04.2017
(51) Int. Cl.: C22B 7/02, C21B 13/08, C21B 13/12, C22B 5/10, C22B 19/30

(54) **METHOD FOR PROCESSING IRON AND STEEL DUST, METHOD FOR PRODUCING ZINC, METHOD FOR PRODUCING STARTING MATERIAL FOR IRON AND STEEL, AND STARTING MATERIAL FOR IRON AND STEEL**

(30) Priority: 28.04.2016 JP 2016090336; 09.09.2016 JP 2016176517
(71) Applicant: Tohoku University, Sendai-shi, Miyagi 980-8577 (JP); Hoei Shokai Co., Ltd., Toyota-shi, Aichi 473-0932 (JP)
(72) Inventor: NAGASAKA, Tetsuya, Sendai-shi Miyagi 980-8577 (JP); YAMAGUCHI, Kazuyoshi, Sendai-shi Miyagi 980-8577 (JP); MIZUNO, Hitoshi, Toyota-shi Aichi 473-0932 (JP); KOIDE, Shunsuke, Toyota-shi Aichi 473-0932 (JP)
(74) Representative: Michalski Hüttermann & Partner Patentanwälte mbB
(86) International application number: PCT/JP2017/014868
(87) International publication number: WO 2017/187973

(57) **Abstract**

[Object] To provide a method for processing steelmaking dust, a method for producing zinc, and a method for producing an iron- and steelmaking raw material, which are more advantageous than the Waelz method in terms of energy and economy.

[Solving Means] A method for processing steelmaking dust according to an embodiment of the present invention includes: adding a calcium compound containing Ca to steelmaking dust containing zinc, the number of moles of Ca being equivalent to or more than the number of moles of Fe in the steelmaking dust; and heating and reducing, in a furnace, the steelmaking dust to which the calcium compound has been added. A ratio of the number of moles of Ca in the calcium compound to the number of moles of Fe in the steelmaking dust is adjusted to be not less than 1.3 and not more than 1.5.

## Description

### Technical Field

The present invention relates to, for example, a method for processing electric furnace steelmaking dust or the like generated in the steelmaking industry, and a method for producing zinc using this method, and a method for producing an iron- and steelmaking raw material.

### Background Art

In the past, approximately 30% of crude steel production in Japan is due to re-melting and smelting of iron scrap using an electric furnace, and zinc on a surface of zinc-plated steel sheet present in the iron scrap is volatilized and re-oxidized during melting and recovered as collected dust containing zinc oxide. The amount of dust generated in Japan reaches approximately 500 thousand to 600 thousand tons per year, and tends to increase due to an increase in plated steel sheet scrap for automobiles and the like in the future. The electric furnace steelmaking dust mainly contains oxides of iron and zinc, ZnO·Fe₂O₃, ZnO, and the like, are contained as a form of zinc, and it is important how efficiently ZnO and Fe₂O₃ can be separated to recover the zinc content that is a non-renewable scarce resource.

Currently, the mainstream method adopted both domestically and internationally as electric furnace steelmaking dust processing is the Waelz method (see, for example, Patent Literature 1 and Non-Patent Literature 1). The Waelz method uses a rotary kiln, adds a carbon material to electric furnace steelmaking dust, heated them to approximately 1300°C by a heavy oil burner or the like to reduce zinc oxide, and temporarily volatilize them as zinc vapor. Since the generated zinc vapor is re-oxidized by CO₂ and O₂ in the atmosphere, zinc is eventually recovered in the form of crude zinc oxide and supplied to a zinc smelting manufacture. Meanwhile, although the residue from which the zinc content is extracted is discharged to the outside of the furnace and a part thereof is recycled in the form of clinker as an electric furnace raw material, most of the others are processed as a roadbed material, a cement raw material, or a landfill material. Recently, it is often stored in an electric furnace steelmaker or a Waelz kiln operator.

A major reason why utilization of the residue from which the zinc content is extracted by the Waelz method is not promoted is due to a large amount of zinc contained in the residue. While the amount of zinc in the electric furnace steelmaking dust is 15.9 to 37.4% by weight, the amount of zinc in the residue ranges from 0.24 to 6.0% by weight (see, e.g., Non-Patent Literature 1). Since the amount of Fe in the residue is large, it is natural that use as a cement raw material is restricted. In addition, the sulfur content derived from the carbon material and the SiO₂ content that leads to an increase in the amount of slag also lead to limitation on use. The reason why the residue containing a large amount of Fe content cannot be used as a raw material of iron and steel is mainly because the amount of zinc is large. Since zinc is circulated in a blast furnace in the steelmaking industry, the upper limit of the amount of zinc permitted as the raw material of iron and steel is approximately 0.1% by weight. For this reason, the Waelz method accelerates reduction zinc by increasing the temperature in the furnace and increasing the reduction time, which is a problem both energetically and economically.

The reason why the amount of zinc in the residue is large is mainly because Fe₃O₄ and FeO are formed in the process of reduction of ZnO·Fe₂O₃, ZnO is solid-soluted in FeO and stabilized, and therefore, reduction of ZnO is not accelerated, and zinc tends to remain in the residue (see Non-Patent Literature 2). There is currently no way to solve this thermodynamically recognized phenomenon, and the use of the residue has not been expanded.

In order to solve the above-mentioned problem, the present inventors have proposed a method of adding CaO content having the number of moles twice or more than the number of moles of Fe in the electric furnace steelmaking dust to dust, holding them in air at not less than 900°C and not more than 1000°C for not less than 60 hours and not more than 120 hours to change ZnO·Fe₂O₃ that is the main zinc component in the dust to ZnO and 2CaO·Fe₂O₃, and performing magnetic separation on the formed ZnO and 2CaO·Fe₂O₃ by high field gradient using the difference in magnetic properties between them (see Patent Literature 2). However, this method has a difficulty in the magnetic separation process, and has not been put into practical use.

Further, the present inventors have proposed a zinc recovering method including: a step of acquiring ZnO and 2CaO·Fe₂O₃ by performing, after mixing electric furnace steelmaking dust and a calcium compound having the number of moles equivalent to or more than the number of moles of Fe in the electric furnace steelmaking dust, heat treatment on the mixture in a non-reducing atmosphere at not less than 960°C and not more than 1100°C for 1 to 3 hours; a step of mixing ZnO and 2CaO·Fe₂O₃ with iron powder having the number of moles equivalent to or more than the number of moles of ZnO and compacting the powder; a step of heating the obtained powder compact in a vacuum container to generate zinc vapor, and cooling and solidifying the zinc vapor to obtain a solid zinc piece; and the like (see Patent Literature 3). However, this method has a difficulty in that more steps are necessary after heat treatment in order to recover zinc, and it is desired to reduce the number of steps.

### Citation List

### Patent Literature

Patent Literature 1: Japanese Patent Application Laid-open No. 1997-268332
Patent Literature 2: Japanese Patent Application Laid-open No. 2009-30121
Patent Literature 3: WO 2015/016086

### Non-Patent Literature

Non-Patent Literature 1: "Assessment of chemical sensitivity of Waelz slag", PERGAMON Waste Management 20(2000)115-124
Non-Patent Literature 2: S.A.Degterov, E.Jak, P.C.Hayes, and A.D.Pelton, Experimental Study of Phase Equibria and Thermodynamic Optimization of the Fe-Zn-O System, Metall.Mater.Trans.B,2001,32,643-657

### Disclosure of Invention

### Technical Problem

In recent years, a technology for processing steelmaking dust, which is capable of efficiently recovering a zinc component, is desired. However, in the mainstream Waelz method, FeO formed in the process of reduction of ZnO·Fe₂O₃ inhibits efficient recovery of a zinc component as described above, which makes it difficult to realize further improvement in recovery efficiency.

In view of the circumstances as described above, it is an object of the present invention to provide a method for processing steelmaking dust, a method for producing zinc, and a method for producing an iron- and steelmaking raw material that are capable of recovering a zinc component more efficiently than the Waelz method.

### Solution to Problem

In order to achieve the above-mentioned object, a method for processing steelmaking dust according to an embodiment of the present invention includes: adding a calcium compound containing Ca to steelmaking dust containing zinc, the number of moles of Ca being equivalent to or more than the number of moles of Fe in the steelmaking dust; and heating and reducing, in a furnace, the steelmaking dust to which the calcium compound has been added, without generating melt.

Accordingly, it is possible to suppress formation of FeO in the process of reduction of ZnO·Fe₂O₃ and efficiently remove zinc from the steelmaking dust.

The calcium compound may contain at least one of quicklime (CaO), hydrated lime (Ca(OH)₂), and calcium carbonate (CaCO₃).

The step of adding the calcium compound to the steelmaking dust may include adjusting a ratio of the number of moles of Ca in the calcium compound to the number of moles of Fe in the steelmaking dust to be not less than 1.3 and not more than 1.5.

The step of heating and reducing the steelmaking dust to which the calcium compound has been added may include adjusting a temperature in the furnace to be less than 1200°C.

The step of adding the calcium compound to the steelmaking dust may include further adding a carbon material to the steelmaking dust.

The step of heating and reducing the steelmaking dust to which the calcium compound has been added may include adding reducing gas to an inside of the furnace.

The furnace may be a rotary kiln, a rotary hearth, or a shaft furnace.

A method for producing zinc according to an embodiment of the present invention includes: recovering a zinc component by adding a calcium compound containing Ca to steelmaking dust containing zinc, the number of moles of Ca being equivalent to or more than the number of moles of Fe in the steelmaking dust, and heating and reducing, in a furnace, the steelmaking dust to which the calcium compound has been added, without generating melt.

Accordingly, it is possible to efficiently recover and produce zinc from the steelmaking dust.

A method for producing reduced iron according to an embodiment of the present embodiment is a method for producing reduced iron, which separates zinc from steelmaking dust to recover zinc as the reduced iron, the method including: removing zinc from the steelmaking dust by adding a calcium compound containing Ca to steelmaking dust containing zinc, the number of moles of Ca being equivalent to or more than the number of moles of Fe in the steelmaking dust, and heating and reducing, in a furnace, the steelmaking dust to which the calcium compound has been added, without generating melt.

Accordingly, it is possible to produce reduced iron having a small amount of zinc.

### Advantageous Effects of Invention

According to the above-mentioned method for processing steelmaking dust, it is possible to recover zinc or produce a raw material of iron and steel more efficiently than the Waelz method.

### Brief Description of Drawings

[Fig. 1] Fig. 1 is a schematic diagram showing an experimental apparatus to be described in an embodiment of the present invention.
[Fig. 2] Fig. 2 shows an X-ray diffraction pattern of a sample after a reaction experiment using the above-mentioned experimental apparatus.
[Fig. 3] Fig. 3 is a schematic diagram showing another experimental apparatus to be described in an embodiment of the present invention.
[Fig. 4] Fig. 4 is a diagram showing a relationship between Ca/Fe and the heating time, which affect formation of 2CaO·Fe₂O₃, among the results of the reaction experiment using the above-mentioned experimental apparatus.
[Fig. 5] Fig. 5 is a diagram showing a relationship between Ca/Fe and the heating temperature, which affect formation of 2CaO·Fe₂O₃, among the results of the reaction experiment using the above-mentioned experimental apparatus.
[Fig. 6] Fig. 6 is a schematic diagram showing a still another experimental apparatus to be described in an embodiment of the present invention.
[Fig. 7] Fig. 7 is a diagram showing the results of the reaction experiment using the above-mentioned experimental apparatus and the results of an experiment according to a comparative example.
[Fig. 8] Fig. 8 shows an X-ray diffraction pattern of a sample according to an example after a reaction experiment using the above-mentioned experimental apparatus shown in Fig. 6.
[Fig. 9] Fig. 9 shows an X-ray diffraction pattern of a sample according to a comparative example after a reaction experiment using the above-mentioned experimental apparatus shown in Fig. 6.

### Mode(s) for Carrying Out the Invention

Hereinafter, embodiments of the present technology will be described with reference to the drawings.

A method for processing steelmaking dust (electric furnace steelmaking dust), a method for producing zinc, and a method for producing an iron- and steelmaking raw material according to an embodiment of the present invention, each include:
adding a calcium compound containing Ca to steelmaking dust containing zinc, the number of moles of Ca being equivalent to or more than the number of moles of Fe in the steelmaking dust; and
heating and reducing, in a furnace, the steelmaking dust to which the calcium compound has been added.

In the heating and reducing, steelmaking dust is heated and reduced without dissolving the steelmaking dust, i.e., without generating melt.

In each of the above-mentioned methods, zinc ferrite (ZnO·Fe₂O₃) that is the main zinc component in the dust is changed to zinc oxide (ZnO) and dicalcium ferrite (2CaO·Fe₂O₃) by addition of the calcium compound in an amount larger than a predetermined amount, and zinc is evaporated by reduction of the zinc oxide (ZnO). Meanwhile, by the reaction from ZnO·Fe₂O₃ to 2CaO·Fe₂O₃, formation of iron (II) oxide (FeO) is inhibited or formation of FeO is suppressed as compared with the case where ZnO·Fe₂O₃ is directly reduced as in the mainstream Waelz method. As a result, as compared with the Waelz method, the amount of ZnO solid-soluted in FeO is minimized, and the amount of recovered zinc is also increased. Therefore, according to this embodiment, it is possible to recover zinc more efficiently than the Waelz method, and recover a residue having a small amount of zinc.

The steelmaking dust functions as the sole recycling route of zinc from used steelmaking products and the like. In this regard, according to the processing method of the present invention, since more zinc can be recovered from the steelmaking dust, it is possible to use more effectively the steelmaking dust as a recycling source of zinc.

Further, according to the processing method of the present invention, since the amount of zinc in the residue can be not more than 0.1% by weight that is the upper limit of the amount of zinc permitted as the raw material of iron and steel by recovering more zinc from the steelmaking dust, it is possible to use the residue as the raw material of iron and steel. Therefore, it is possible to use the steelmaking dust as recycling sources of not only zinc but also iron.

That is, the residue obtained by performing processing of the present invention on the electric furnace steelmaking dust generated in a blast furnace can be charged into a blast furnace as the raw material of iron and steel. Therefore, by using the processing method of the present invention, a steelmaking material can be recycled, and it is possible to establish a recycling material flow in a steelmaking material.

Further, in the processing method of the present invention, since the above-mentioned steps are performed, a residue having a characteristic composition that the amount (% by weight) of 2CaO·Fe₂O₃ is larger than the amount (% by weight) of FeO can be obtained. When this residue is used as the raw material of iron and steel, the addition amount of the calcium compound to be charged into the blast furnace can be reduced depending on the amount of 2CaO·Fe₂O₃ in the residue.

Table 1 shows an example of the composition of the steelmaking material of the present invention and the composition of the existing clinker by the Waelz method. The unit of each of numerical values in Table 1 is "% by weight". In the raw material of iron and steel of the present invention, the amount of zinc is small, FeO is not substantially contained, and 2CaO·Fe₂O₃ is contained. Further, CaO exists in the state of being bound with SiO₂, Al₂O₃, or the like. Meanwhile, in the existing clinker by the Waelz method, the amount of zinc and FeO is large, and 2CaO·Fe₂O₃ is not substantially contained.

**[Table 1]**

| | Zn | 2CaO· Fe2O3 | FeO | M.Fe | CaO |
|---|---|---|---|---|---|
| Raw material of iron and steel of present invention | 0.07 | 52.6 | - | - | 17.2 |
| Existing clinker by Waelz method | 1.25 | - | 19.3 | 30.0 | 10.0 |

In the existing main Waelz method, since no Ca content is added or the addition amount of Ca is small, in the case where a carbon material is used for reduction, ZnO·Fe₂O₃, ZnO, and Fe₂O₃ in the dust react with carbon in the carbon material as follows.

ZnO·Fe₂O₃+4C=Zn (g) +2Fe+4CO (g) ZnO+C=Zn (g) +CO (g) Fe₂O₃+ 3C=2Fe+3CO(g)

In the temperature range of 1200 to 1300°C in the Waelz method, the reduction reaction of Fe₂O₃ is fast, and Fe is formed. As a result, this Fe and ZnO react with each other as follows, and FeO is formed.

ZnO+Fe=Zn(g)+FeO

ZnO before being reduced is solid-soluted in this FeO, and inhibits reduction of ZnO. Therefore, in the Waelz method, as described above, 0.24 to 6.0% by weight of Zn is contained in the residue. Due to this, it is difficult to reuse the residue by the Waelz method as the raw material of iron and steel, for example. The inventors conducted an experiment as a comparative example to the method of the present invention in order to clarify the existing problem of the Waelz method. This will be described later.

### [Step of Adding Calcium Compound]

In this embodiment, by adding the above-mentioned calcium compound containing a predetermined amount of Ca to dust, ZnO·Fe₂O₃ is changed to ZnO and 2CaO·Fe₂O₃ in the heat reduction step. That is, the basic idea of this embodiment is to add a calcium compound containing Ca in an amount sufficient to change all ZnO·Fe₂O₃ and Fe₂O₃ in the dust to 2CaO·Fe₂O₃ in order to suppress formation of FeO due to the reduction reaction of Fe₂O₃.

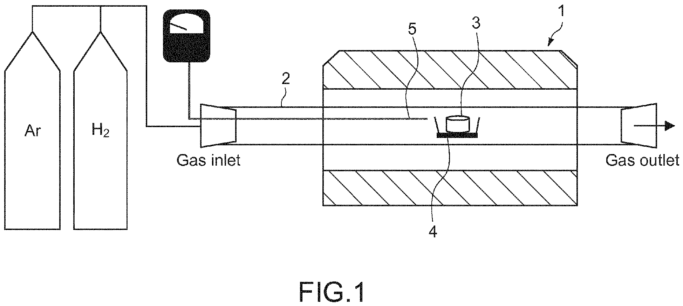

The present inventors first checked whether there is formation of FeO from 2CaO·Fe₂O₃ in the heat reduction step by using a self-made experimental apparatus 1 shown in Fig. 1. The experimental apparatus 1 includes an electric tube furnace. In Fig. 1, a reference numeral 2 represents a quartz tube forming an air flow of reducing gas (mixed gas of hydrogen and argon) in the furnace, a reference numeral 4 represents an alumina boat setting a sample 3 in the furnace, and a reference numeral 5 represents a thermocouple detecting the temperature in the furnace. Note that illustration of a heating element is omitted.

A sample obtained by mixing 2CaO·Fe₂O₃ synthesized with a reagent and ZnO as a reagent at a molar ratio of 1:1 was pressurized to prepare a briquette having a diameter of 10 mm and a height of 10 to 15 mm as a sample. Subsequently, this sample was set in a furnace, and reduced at 600°C for 1 hour in a hydrogen gas flow.

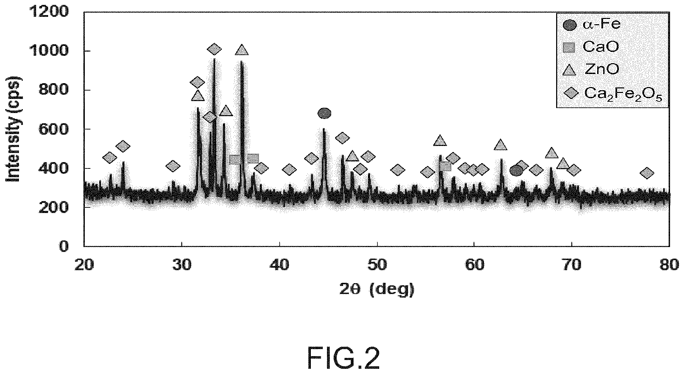

The results of X-ray diffraction of the reduced sample are shown in Fig. 2. It can be seen that Fe is directly formed from 2CaO·Fe₂O₃ without forming FeO. That is, it is expected that FeO in which ZnO is to be solid-soluted to be stabilized, which is a problem in the Waelz method, is not formed, and the amount of zinc in the residue is significantly reduced. Further, at the same time, improvement in efficiency of recovering zinc is also expected.

The calcium compound needs to contain Ca in an amount sufficient to change all ZnO·Fe₂O₃ in the dust and Fe₂O₃ to 2CaO·Fe₂O₃ as described above. Meanwhile, the Ca content to be mixed is not only used for formation of 2CaO·Fe₂O₃, and but also consumed for formation of a compound with SiO₂, Al₂O₃, or the like contained in the dust.

In the case where the ratio of the amount of moles of the Ca content to the amount of moles of the Fe content necessary for changing all Fe content in the dust to 2CaO·Fe₂O₃ is 1.0, when SiO₂ and Al₂O₃ are zero, theoretically, the object should be achieved with this numerical value of 1.0. However, when there are SiO₂ and Al₂O₃, extra Ca content is necessary due to formation of compounds such as CaO·SiO₂ and CaO·Al₂O₃.

Table 2 shows an example of a typical chemical composition of electric furnace steelmaking dust. When calculating the amount of the Ca content necessary due to formation of compounds of CaO·SiO₂ and CaO·Al₂O₃ from types A to E of dust, extra Ca content in an amount corresponding to 0.05 to 0.10 with respect to the ratio 1.0 of the Ca content necessary for changing to 2CaO·Fe₂O₃ is necessary. Further, the extra amount of the Ca content necessary due to formation of compounds of 2CaO·SiO₂ and 3CaO-Al₂O₃ is 0.11 to 0.23. Therefore, the ratio of the Ca content necessary for changing to 2CaO·Fe₂O₃ is 1.23 by adding the maximum value of the above-mentioned extra amount.

**[Table 2]**

| Type of dust | Zn | Fe | SiO₂ | Al₂O₃ |
|---|---|---|---|---|
| A | 22.7 | 35.8 | 4.62 | 2.32 |
| B | 43.3 | 20.9 | 3.59 | 1.81 |
| C | 24.9 | 31.1 | 3.87 | 1.95 |
| D | 39.4 | 20.6 | 1.99 | 1.00 |
| E | 35.7 | 28.3 | 2.35 | 1.18 |
| (Unit: % by weight) | | | | |

However, the ratio 1.0 (1.23 when adding the Ca content consumed for SiO₂ and Al₂O₃) of the Ca content necessary for changing to 2CaO·Fe₂O₃ is only a chemical equivalent value, and it is expected that it will be further larger than this value considering the contact opportunity and the like of the Ca content mixed in the dust and ZnO·Fe₂O₃ and Fe₂O₃ in the dust.

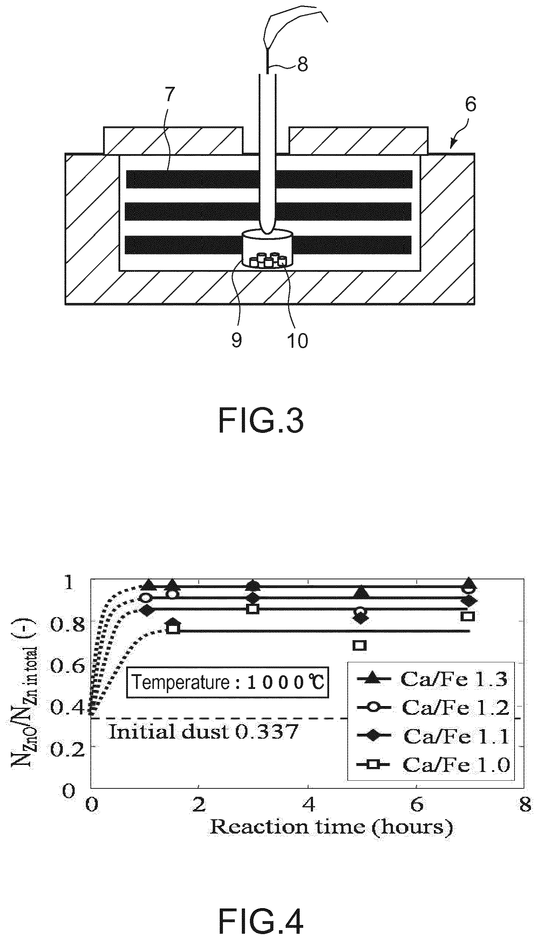

In view of the above, the present inventors used an experimental apparatus 6 shown in Fig. 3 for considering the addition amount of the calcium compound containing Ca in an amount necessary for changing all ZnO·Fe₂O₃ and Fe₂O₃ in the dust to 2CaO·Fe₂O₃. The experimental apparatus 6 includes an electric furnace. In Fig. 3, a reference numeral 7 represents a heating element for heating the inside of the furnace, a reference numeral 8 represents a thermocouple for detecting the temperature in the furnace, and a reference numeral 9 represents an alumina crucible for housing a sample 10.

As a sample 10, CaO as a reagent was added to electric furnace steelmaking dust with Zn=22.4% by weight, Fe=26.5% by weight, SiO₂=4.70% by weight, and Al₂O₃=2.36% by weight to prepare a pressurized briquette having a diameter of 10 mm and a height of approximately 10 mm. Subsequently, this sample was set in the furnace and heated at 700 to 1100°C in an open air atmosphere for 1 to 7 hours to measure the change in the ratio of ZnO to total zinc in the dust. Further, the number of moles of the Ca content to be added to the number of moles of the Fe content in the dust was changed from 1.0 to 1.4.

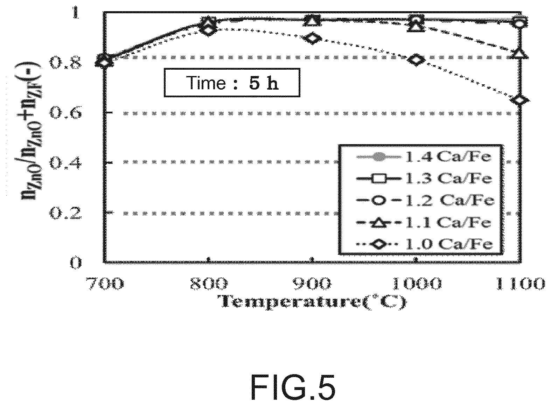

The analysis results after heating are shown in Fig. 4 and Fig. 5. Fig. 4 shows a relationship between the ratio of ZnO to total zinc in the dust at the heating temperature of 1000°C and the heating time, and Fig. 5 shows a relationship between the ratio of ZnO to total zinc in the dust after the reaction time of 5 hours and the heating time. The ratio of ZnO to total zinc in the sample before heating was 0.337.

Note that three kinds of dissolution methods were used as methods of measuring the ratio of ZnO. The methods include leaching with ion exchanged water, leaching with a solution obtained by mixing 10 milliliters of ammonium acetate, 5 g of ammonium chloride, and 25 milliliters of water, and an alkali fusion method. The ion-exchanged water dissolves only ZnCl₂, and the above-mentioned solution dissolves ZnO and ZnCl₂. Further, since all zinc compounds are dissolved by the alkali fusion, the concentration of ZnO was obtained by using the leaching results by these solutions, and converted into ratios.

ZnO·Fe₂O₃ in the electric furnace steelmaking dust is changed to 2CaO·Fe₂O₃ and ZnO by adding CaO thereto. As shown in the vertical axes of Fig. 4 and Fig. 5, the ratio of ZnO to total zinc in the dust is substantially constant with a value close to 1.0 at a predetermined time or more or at a predetermined temperature or more. This represents that all ZnO·Fe₂O₃ is changed to 2CaO·Fe₂O₃. Note that the reason why the vertical axis does not reach 1.0 is presumably because other forms of zinc (e.g., ZnCl₂) are included in the dust.

With reference to Fig. 4, the reaction is substantially completed in 1.0 hour. With reference to Fig. 5, it can be seen that the molar ratio (Ca/Fe in the figure) of the Ca content to the Fe content in which all Ca content is changed to 2CaO·Fe₂O₃ is increased as the temperature is increased, and all Ca content is changed to 2CaO·Fe₂O₃ at 1100°C in the case of Ca/Fe=1.3 or more.

As described above, by setting the ratio (Ca/Fe in the figure) of the number of moles of Ca to the number of moles of Fe to 1.3 or more, it is possible to more efficiently produce dicalcium ferrite (2CaO·Fe₂O₃). Although the upper limit of the molar ratio of the Ca content to the Fe content is not particularly limited, when too much Ca content is added, the amount of charge in the furnace is increased and the energy necessary for heating becomes large. From such a viewpoint, the molar ratio of the Ca content to the Fe content is favorably 1.5 or less and more favorably 1.4 or less. It goes without saying that the molar ratio of the Ca content to the Fe content is not limited to this value and can be appropriately changed depending on the amount of SiO₂ or Al₂O₃ contained in the dust, or the like.

As the above-mentioned calcium compound, for example, quicklime (CaO), hydrated lime (Ca(OH)₂), calcium carbonate (CaCO₃), or the like can be used alone or in combination. Since these calcium compounds relatively readily available, they are advantageous in terms of cost.

Hydrated lime decomposes at 517°C to form CaO, and calcium carbonate decomposes at 885°C to form CaO. As shown in Fig. 5, since a considerable amount of 2CaO·Fe₂O₃ is formed even at 700°C and the reaction becomes fast at 900°C to the degree that formation of 2CaO·Fe₂O₃ is substantially completed, it does not depend on the type of the calcium compound containing Ca.

Note that the reason why the heating atmosphere is set to the atmosphere in the experimental examples shown in Fig. 3 to Fig. 5 is to suppress reduction of ZnO to measure the ratio of ZnO to total zinc in the dust. The present inventors confirmed that the same results as show in Fig. 4 and Fig. 5 were obtained also under the reducing heating regarding the relationship between the efficiency for forming ZnO/2CaO·Fe₂O₃ in each Ca ratio described above and the reaction time and heating temperature.

### [Heating and Reducing Step]

After ZnO·Fe₂O₃ in the dust is separated into ZnO and 2CaO·Fe₂O₃, they are heated and reduced in the furnace. Accordingly, the zinc component in the dust is evaporated. Therefore, it is possible to recover zinc without a separate reduction step, and acquire a residue in which the amount of the zinc component is reduced (raw material of iron and steel).

The method of heating and reducing the dust to which the calcium compound has been added is not particularly limited, and a carbon material may be further mixed with the dust or reducing gas may be added to the inside of the furnace. Examples of the carbon material include, typically, carbonaceous materials such as coal, graphite, and coke. Examples of the reducing gas include, typically, hydrocarbons such as methane, ethane, and propane, in addition to hydrogen.

Also the heating reduction furnace is not particularly limited. Typically, a rotary kiln or a rotary hearth is used, but a shaft furnace may be used. The pressure in the furnace may be atmospheric pressure or reduced pressure atmosphere.

The temperature inside the furnace in the reduction heating step is favorably less than 1200°C. As shown in Fig. 5, a considerable amount of 2CaO·Fe₂O₃ is formed even at 700°C and formation of 2CaO·Fe₂O₃ is substantially completed at 900°C (in the case where Ca/Fe is 1.3 or more). Therefore, since the formation rate becomes higher as the temperature is increased, the higher temperature is favorable. Meanwhile, CaO and Fe₂O₃ have a composition that generates melt at 1205°C, and deposits are generated in the furnace with this melt as a starting point. In view of the above, in this embodiment, the temperature inside the furnace is adjusted to less than 1200°C, favorably to approximately 1100°C, considering that there is temperature distribution in the furnace.

As an example, a sample obtained by mixing electric furnace steelmaking dust with hydrated lime (Ca(OH)₂) so that Ca/Fe=1.4 and molded into a briquette (approximately 10 mm × 30 mm) was charged to a rotary kiln manufactured by HOEI METAL Co., Ltd. In the state where the temperature of the brick surface in the kiln reached 1129°C at the maximum under the operating condition of the temperature in the furnace of 1230°C, black strong deposits were generated on the brick surface in the kiln after finishing the operation and cooling. Further, no deposit was generated in the case where the temperature of the brick surface in the kiln was adjusted to 1096°C at the maximum under the operation condition of the temperature inside the furnace of 1195°C.

The zinc component to be recovered is typically zinc metal, but may be a zinc compound such as zinc oxide. The recovery method is not particularly limited. Examples of the recovery method include a method of bringing zinc vapor volatilized from the dust into contact with a low temperature body (cooling pipe, cooling panel, or the like) installed inside or outside the furnace, and condensing it.

In the heat reduction processing of dust in this embodiment, zinc oxide in dust is reduced by heating the dust in a reducing atmosphere or in the coexistence of a carbon material, thereby volatilizing zinc from the dust, as described above. Accordingly, it is possible to acquire a high-quality residue having less zinc component. Further, according to this embodiment, it is possible to efficiently recover the zinc component from the dust.

As described above, according to this embodiment, it is possible to provide a method of recovering zinc from dust containing zinc such as electric furnace steelmaking dust, which makes it possible to significantly reduce the amount of zinc in the residue, which has been a problem in the Waelz method, and reuse the residue of electric furnace steelmaking dust as the raw material of iron and steel without mixing it with scrap. Further, since the increase in the temperature inside the furnace, which has been a problem in the Waelz method, can be suppressed and also the reduction time can be remarkably shortened, it is possible to provide a zinc recovering method that is efficient both energetically and economically.

### Example

Hereinafter, examples of the present invention will be described. However, the present invention is not limited to the following examples.

A sample obtained by adding graphite powder as a carbon material and CaO as a reagent to electric furnace steelmaking dust with Zn=22.4% by weight, Fe=26.5% by weight, SiO₂=4.70% by weight, Al₂O₃=2.36% by weight, and chlorine=3.75% by weight was pressurized to prepare a briquette having a diameter of 10 mm and a height of approximately 10 mm, as a sample. The ratio of the number of moles of the Ca content to be added to the number of moles of the Fe content in the dust was 1.4.

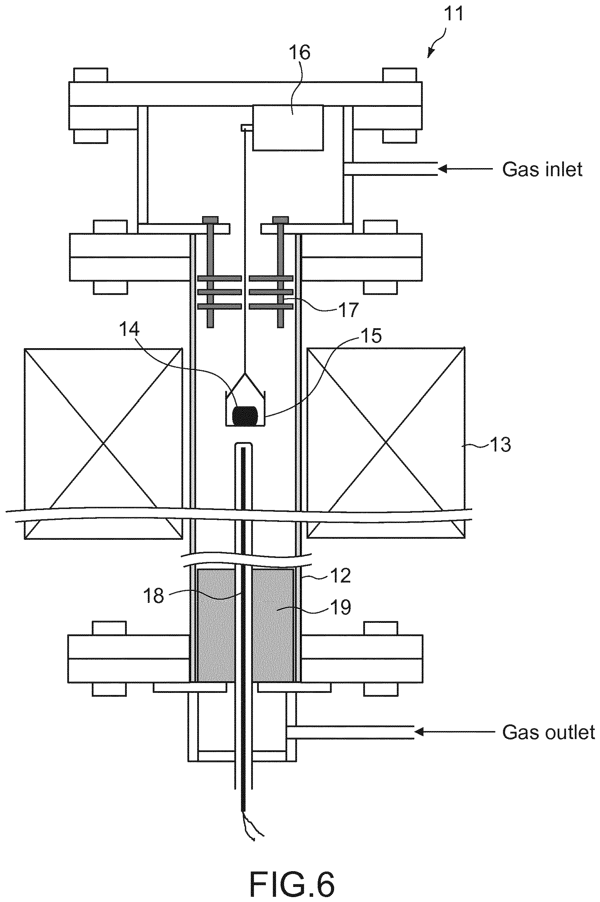

Subsequently, the above-mentioned sample was heated in a nitrogen flow at 1100°C for 15 minutes by using an experimental apparatus 11 manufactured by the present inventors shown in Fig. 6. As a comparative example, an experiment including no CaO was also conducted. The formulation amounts of graphite powder and CaO in the example and the comparative example are shown in Table 3.

**[Table 3]**

| | Formulation | | |
|---|---|---|---|
| | Steelmaking dust | Graphite powder | Quicklime |
| Example | 1.37 | 0.12 | 0.51 |
| Comparative example | 1.37 | 0.12 | - |
| (Unit: g) | | | |

As shown in Fig. 6, the experimental apparatus 11 includes a quartz tube 12 forming a furnace chamber therein, a heating element 13 disposed around the quartz tube 12, an alumina boat 15 supporting a sample 14, and a strain gauge 16 that detects the weight change of the sample 13 while suspending and supporting, with wire, the alumina boat 15 set in the furnace at a position directly above the quartz tube 12. Note that a reference numeral 17 represents a heat shielding plate, a reference numeral 18 represents a thermocouple, and a reference numeral 19 represents a refractory brick.

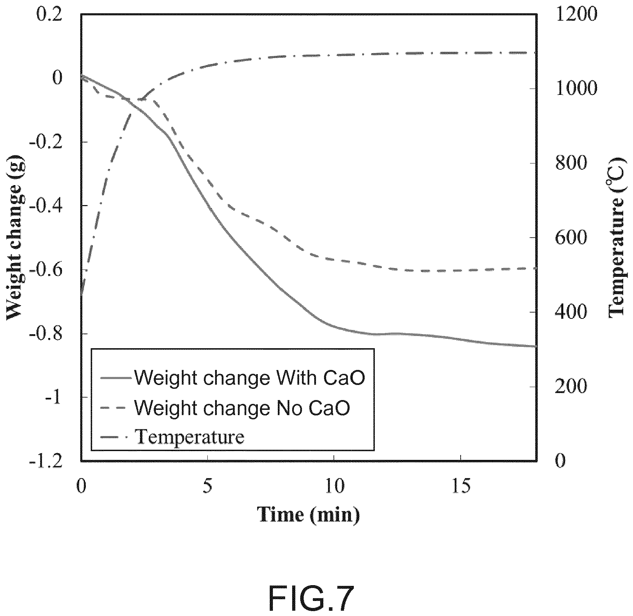

Fig. 7 shows the time-dependent change in the weight reduction at the time of heating the sample in the experimental apparatus. In the figure, the solid line indicates the weight change of the sample according to the example, the broken lines indicate the weight change of the sample according to the comparative example, and the alternate long and short dash line indicates the temperature inside the furnace measured by the thermocouple 18.

The weight reduction rate of the sample according to the example (with CaO) is higher than that in the comparative example (no CaO). This is because the reduction rate of ZnO separated by formation of 2CaO·Fe₂O₃ is higher than that of ZnO·Fe₂O₃ in the comparative example. From this, it is confirmed that the present invention is advantageous both energetically and economically because ZnO can be reduced at a lower temperature and in a shorter time than the Waelz method.

Further, the results of analyzing the zinc content of the residue after finishing the experiment are shown in Table 4. In this example, it was 0.07% by weight (dezincification rate of 99.7%), and a remarkable decrease in the amount of remained zinc was observed as compared with 4.61% by weight (dezincification rate of 87.8%) in the comparative example, which demonstrated the excellent effect of the present invention.

Further, according to the result of analyzing chlorine of the residue after finishing the experiment, it was 0.05% by weight (dezincification rate of 98.8%) in the example of the present invention , and a remarkable decrease in the amount of chlorine was confirmed as compared with 1.65% by weight (dezincification rate of 74.1%) in the comparative example. That is, according to the present invention, it was confirmed that the removal rate of not only zinc but also chlorine was high.

**[Table 4]**

| | Residue | |
|---|---|---|
| | Zinc | Chlorine |
| Example | 0.07wt% (Dezincification rate99.7%) | 0.05wt% (Dezincification rate98.8%) |
| Comparative example | 4.61wt% (Dezincification rate87.8%) | 1.65wt% (Dezincification rate74.1 %) |

Further, Table 5 was obtained by calculating the ratio (Ca/Fe) of the number of moles of Ca and the number of moles of Fe in the electric furnace steelmaking dust from the analysis values of the Fe content and Ca content in the residue. The unit of each of values of Fe and CaO in Table 5 is "% by weight". From Table 5, it can be seen that the value of (Ca/Fe) according to this example (with CaO) is higher than that in the comparative example (no CaO).

**[Table 5]**

| | Fe | CaO | Ca/Fe |
|---|---|---|---|
| Example | 31.10 | 49.30 | 1.58 |
| Comparative example | 45.49 | 8.99 | 0.20 |

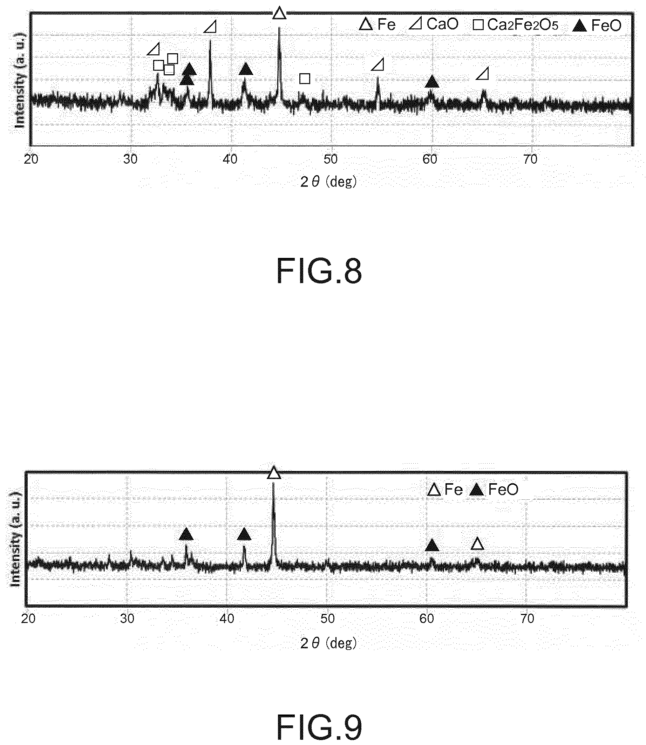

Fig. 8 shows an X-ray diffraction pattern of the reduced sample according to the example, and Fig. 9 shows an X-ray diffraction pattern of the reduced sample according to the comparative example.

As shown in Fig. 8, in the case where electric furnace steelmaking dust mixed with a calcium compound is heated and reduced, 2CaO·Fe₂O₃ was preferentially formed, and only a slight amount of FeO was formed. It has been confirmed, by the analysis of the zinc content in the residue (amount of only 0.07% by weight), that no ZnO is solid-soluted in this FeO, as described above.

Meanwhile, as shown in Fig. 9, only Fe and FeO were detected in the comparative example in which no calcium compound is mixed. The diffraction pattern of FeO shows a peak shift that seems to be due to solid solution of other components, and it is estimated that the above-mentioned zinc content having a value as high as 4.61% by weight confirmed by the analysis of the zinc content in the residue does not exist as ZnO and is solid-soluted in FeO.

Here, the reason why the amount of formed FeO in the example (Fig. 8) is smaller than that in the comparative example (Fig. 9) is presumably because formation of FeO is suppressed as the reaction of CaO and ZnO·Fe₂O₃ proceed (see the example described with reference to see Fig. 2).

Further, the reason why FeO is formed in the example is presumably because a part of Fe₂O₃ is reduced to form FeO before the reaction of CaO and ZnO·Fe₂O₃ is finished.

Further, the reason why ZnO is hardly solid-soluted in FeO formed in a slight amount is presumably because the rate at which ZnO and 2CaO·Fe₂O₃ are formed is higher than the rate at which ZnO is formed from ZnO·Fe₂O₃ in the comparative example.

As described above, according to the present example, since the amount of zinc equal to or less than 0.1% by weight, which is the upper limit of the amount of zinc permitted as the raw material of iron and steel, can be achieved, it is expected to be widely used as the raw material of iron and steel. Further, it leads to a reduction in the operating temperature and a remarkable shortening of the reduction time, and is expected to be expanded as a zinc recovering method that is efficient both energetically and economically.

Further, an experiment for confirming that zinc and Fe can be separated well by the present invention was conducted. A sample obtained by mixing electric furnace steelmaking dust with hydrated lime (Ca(OH)₂) so that Ca/Fe=1.4 and molded into a briquette (approximately 10 mm × 30 mm) was charged to a rotary kiln manufactured by HOEI METAL Co., Ltd. When stopping the operation 6 hours after the temperature of the brick surface in the kiln reached 1120°C at the maximum and analyzing the substances after cooling, as shown in Table 6, the briquette was separated into a volatile condensate and a residue in the kiln, zinc was concentrated in the volatile condensate, and Fe was concentrated in the residue in the kiln, thereby obtaining the results with very good separation of zinc and Fe. Note that the unit of each of numerical values in Table 6 is "% by weight".

**[Table 6]**

| | Zn | Fe | Pb | Cl | F |
|---|---|---|---|---|---|
| Steelmaking dust | 20.48 | 21.43 | 1.56 | 2.70 | 0.95 |
| Volatile condensate | 55.10 | 0.47 | 6.56 | 15.38 | 1.29 |
| Residue in kiln | 0.98 | 21.60 | 0.01 | 0.02 | 0.11 |

### [Reference Example]

Note that in the Waelz method, a technology for adding Ca content to electric furnace steelmaking dust for the purpose of suppressing generation of deposits in a rotary kiln, for example, has been proposed. For example, Japanese Examined Patent Publication No. 1990-47529 discloses an example (hereinafter, technology 1) in which the weight ratio of CaO/SiO₂ is not less than 2.5 for the purpose of suppressing generation of deposits and improving the removal rate of halogen content such as fluorine in the electric furnace steelmaking dust, Japanese Patent Application Laid-open No. 2003-342649 discloses an example (hereinafter, technology 2) in which the mass ratio of CaO/carbon material is not less than 0.03, more favorably not less than 0.13, for the purpose of accelerating reduction of ZnO, and Japanese Patent Application Laid-open No. 2013-159797 discloses an example in which the weight ratio of CaO/SiO₂ is not less than 1.5 and the particle size of the CaO source is adjusted so that the -0.2 mm ratio is not less than 80% by mass for the purpose of suppressing generation of deposits.

However, the addition amount of Ca content proposed in these technologies is significantly smaller than that in the present invention. The ratio of the number of moles of Ca and the number of moles of Fe in the electric furnace steelmaking dust calculated from data regarding the Fe content and Ca content in the dust in the above-mentioned technologies 1 and 2 as an example is as shown in Table 7. In Table 7, data of "Waelz" is the data described in the above-mentioned Non-Patent Literature 1, and data of "Shisaka" is the data described in "EAF Dust Treatment at Shisaka Works" (Journal of MMIJ,Vol.123(2007)No.12 726-729). The unit of each of numerical values other than Ca/Fe in Table 7 is "% by weight". As shown in Table 7, it is obvious that the addition amount of Ca content in the Waelz method is 0.19 to 0.63 in terms of the ratio of Ca/Fe, which is remarkably lower than that in the present invention.

**[Table 7]**

| | Waelz | | | | | Shisaka | Technology 1 | Technology 2 | |
|---|---|---|---|---|---|---|---|---|---|
| CaO | 7.58 | 15.3 | 7.7 | 13.1 | 23.5 | 10 | 10.3 | 7.7 | 5.9 |
| T.Fe | - | - | - | - | - | 50 | 26.8 | 12.1 | 31.1 |
| M.Fe | 17.2 | 24.9 | 23.2 | 23.3 | 6.21 | 30 | - | - | - |
| FeO | 6.62 | 3.47 | 6.75 | 21.5 | 39.7 | - | - | - | - |
| Ca/Fe | 0.34 | 0.55 | 0.27 | 0.33 | 0.63 | 0.20 | 0.38 | 0.63 | 0.19 |

### Reference Signs List

- 1,6,11: experimental apparatus

## Claims

1. A method for processing steelmaking dust, comprising:
adding a calcium compound containing Ca to steelmaking dust containing zinc, the number of moles of Ca being equivalent to or more than the number of moles of Fe in the steelmaking dust; and
heating and reducing, in a furnace, the steelmaking dust to which the calcium compound has been added, without generating melt.

2. The method for processing steelmaking dust according to claim 1, wherein
the calcium compound contains at least one of quicklime (CaO), hydrated lime (Ca(OH)₂), and calcium carbonate (CaCO₃).

3. The method for processing steelmaking dust according to claim 1 or 2, wherein
the step of adding the calcium compound to the steelmaking dust includes adjusting a ratio of the number of moles of Ca in the calcium compound to the number of moles of Fe in the steelmaking dust to be not less than 1.3 and not more than 1.5.

4. The method for processing steelmaking dust according to any one of claims 1 to 3, wherein
the step of heating and reducing the steelmaking dust to which the calcium compound has been added includes adjusting a temperature in the furnace to be less than 1200°C.

5. The method for processing steelmaking dust according to any one of claims 1 to 4, wherein
the step of adding the calcium compound to the steelmaking dust includes further adding a carbon material to the steelmaking dust.

6. The method for processing steelmaking dust according to any one of claims 1 to 4, wherein
the step of heating and reducing the steelmaking dust to which the calcium compound has been added includes adding reducing gas to an inside of the furnace.

7. The method for processing steelmaking dust according to any one of claims 1 to 6, wherein
the furnace is a rotary kiln, a rotary hearth, or a shaft furnace.

8. A method for producing zinc, comprising:
recovering a zinc component by
adding a calcium compound containing Ca to steelmaking dust containing zinc, the number of moles of Ca being equivalent to or more than the number of moles of Fe in the steelmaking dust, and
heating and reducing, in a furnace, the steelmaking dust to which the calcium compound has been added, without generating melt.

9. The method for producing zinc according to claim 8, wherein
the step of adding the calcium compound to the steelmaking dust includes adjusting a ratio of the number of moles of Ca in the calcium compound to the number of moles of Fe in the steelmaking dust to be not less than 1.3 and not more than 1.5.

10. The method for producing zinc according to claim 8 or 9, wherein
the step of heating and reducing the steelmaking dust to which the calcium compound has been added includes adjusting a temperature in the furnace to be less than 1200°C.

11. A method for producing an iron- and steelmaking raw material, which separates zinc from steelmaking dust to recover zinc as the iron- and steelmaking raw material, the method comprising:
removing zinc from the steelmaking dust by
adding a calcium compound containing Ca to steelmaking dust containing zinc, the number of moles of Ca being equivalent to or more than the number of moles of Fe in the steelmaking dust, and
heating and reducing, in a furnace, the steelmaking dust to which the calcium compound has been added, without generating melt.

12. The method for producing an iron- and steelmaking raw material according to claim 11, wherein
the step of adding the calcium compound to the steelmaking dust includes adjusting a ratio of the number of moles of Ca in the calcium compound to the number of moles of Fe in the steelmaking dust to be not less than 1.3 and not more than 1.5.

13. The method for producing an iron- and steelmaking raw material according to claim 11 or 12, wherein
the step of heating and reducing the steelmaking dust to which the calcium compound has been added includes adjusting a temperature in the furnace to be less than 1200°C.

14. A raw material of iron and steel, comprising:
zinc whose amount is not more than 0.1% by weight; and
dicalcium ferrite (2CaO·Fe₂O₃) whose amount (% by weight) is large and iron (II) oxide (FeO) whose amount (% by weight) is small.
